# EUROPEAN PATENT APPLICATION

(11) **EP 4 535 513 A1**
(43) Date of publication of application: **09.04.2025**
(21) Application number: 23811915.0
(22) Date of filing: 26.05.2023
(51) Int. Cl.: H01M 10/658, F16L 59/04, H01M 10/625, H01M 10/651, H01M 10/6555

(54) **HEAT TRANSFER SUPPRESSION SHEET AND BATTERY PACK**

(30) Priority: 27.05.2022 JP 2022086808
(71) Applicant: IBIDEN CO., LTD., Ogaki-shi, Gifu 503-8604 (JP)
(72) Inventor: KUMANO, Keiji, Ibi-gun, Gifu 501-0695 (JP); IDO, Takahiko, Ibi-gun, Gifu 501-0695 (JP)
(74) Representative: Hoffmann Eitle
(86) International application number: PCT/JP2023/019811
(87) International publication number: WO 2023/229043

(57) **Abstract**

To provide a heat transfer suppression sheet that can provide strength to retain a shape of a heat transfer suppression sheet even applied with an impact and pressing force and that can thereby suppress powder falling and maintain an excellent heat insulation performance, and a battery pack including the heat transfer suppression sheet. A heat transfer suppression sheet (10) includes an inorganic particle (4) and an organic fiber (1). In addition, a surface of the heat transfer suppression sheet (10) is formed with a first region (2) having a stripe-like fiber bundle (7) composed of organic fibers (1) and a second region (3) without the fiber bundle (7).

## Description

### TECHNICAL FIELD

The present invention relates to a heat transfer suppression sheet and a battery pack including the heat transfer suppression sheet.

### BACKGROUND ART

In recent years, from the viewpoint of environmental protection, an electric vehicle or a hybrid vehicle driven by an electric motor has been actively developed. The electric vehicle or the hybrid vehicle is equipped with a battery pack in which battery cells are connected in series or in parallel to serve as a power source for a driving electric motor.

In addition, a lithium ion secondary battery, which has higher capacity and is capable of higher output than a lead-acid battery, a nickel-metal hydride battery, or the like, is mainly used for the battery cells. When a certain battery cell suddenly rises in temperature due to an internal short circuit or overcharging of the battery, and then causes thermal runaway that continues to generate heat, the heat from the battery cell that has experienced thermal runaway may propagate to other adjacent battery cells, thereby causing thermal runaway in other battery cells.

As a method of suppressing the propagation of heat from the battery cell that has experienced thermal runaway as described above, a method of interposing a heat insulation sheet between battery cells is generally used.

For example, Patent Literature 1 discloses a heat insulation sheet for a battery pack, which contains a first particle composed of a silica nanoparticle and a second particle composed of a metal oxide, in which the content of the first particle is limited. In addition, Patent Literature 1 discloses that the heat insulation sheet may contain a binding material composed of at least one kind selected from a fiber, a binder, and a heat-resistant resin.

In addition, the above Patent Literature 1 discloses that dry silica or wet silica can be used as the first particle, and this heat insulation sheet can be produced by a dry molding method or a wet papermaking method.

### CITATION LIST

### PATENT LITERATURE

Patent Literature 1: JP2021-34278A

### SUMMARY OF INVENTION

### TECHNICAL PROBLEM

Examples of a binder for producing a heat insulation sheet (heat transfer suppression sheet) include a wet heat adhesive binder fiber, and the wet heat adhesive binder fiber needs to be kept in a wet state during production in order to exhibit adhesiveness. Therefore, in the case of using the wet heat adhesive binder fiber, the heat insulation sheet needs to be produced by a wet papermaking method.

However, in order to further improve a heat insulation performance, in the case of using dry silica or silica aerogel having a low thermal conductivity, there is a problem that the heat insulation sheet cannot be produced by a wet papermaking method. This is because when a material containing dry silica is molded into a sheet by a wet papermaking method, the dry silica aggregates with water and the thermal conductivity increases. In general, silica aerogel is difficult to disperse in water, so that when a material containing silica aerogel is molded by a wet papermaking method, it is not possible to obtain a heat insulation sheet in which the material is evenly dispersed, resulting in quality deterioration.

On the other hand, when a heat insulation sheet is produced by a dry molding method using an inorganic particle such as dry silica or silica aerogel, the inorganic particle may fall off (hereinafter also referred to as powder falling) due to a pressure or impact. In particular, in recent battery packs, the capacity of the battery cells has been further improved, so that an expansion rate during charging and discharging has been increased. Therefore, in the case where a heat insulation sheet is disposed between battery cells of a battery pack, when strength of the entire heat insulation sheet is low, the heat insulation sheet is compressed by the expansion of the battery cells during charging and discharging of the battery cells, and powder falling occurs, resulting in a decrease in heat insulation performance. As a result, when the battery cell experiences thermal runaway and reaches a high temperature, the heat insulation sheet may not be able to exhibit an effect and a thermal chain reaction may occur. Therefore, there is a need for a heat insulation sheet that has high strength to retain a shape, can suppress powder falling, and can maintain an excellent heat insulation property, and a production method therefor.

Although the heat insulation sheet disclosed in the above Patent Literature 1 maintains an excellent heat insulation property even when a compressive stress increases, further improvements in heat insulation property, strength, and performance to suppress powder falling are required.

The present invention has been made in view of the above problems, and an object thereof is to provide a heat transfer suppression sheet that can provide strength to retain a shape of a heat transfer suppression sheet even applied with an impact and pressing force and that can thereby suppress powder falling and maintain an excellent heat insulation performance, and a battery pack including the heat transfer suppression sheet.

### SOLUTION TO PROBLEM

The above object of the present invention is achieved by the following configuration [1] relating to a heat transfer suppression sheet.

[1] A heat transfer suppression sheet containing:
   an inorganic particle; and
   an organic fiber, in which
   a surface of the heat transfer suppression sheet has a first region and a second region, the first region having a stripe-like fiber bundle composed of the organic fibers, and the second region does not contain the fiber bundle.
   Preferred embodiments of the present invention relating to the heat transfer suppression sheet relate to the following [2] to [8].
[2] The heat transfer suppression sheet according to [1], in which the first region has the stripe-like fiber bundle passing through at least three continuous virtual frames, each frame being a 5 mm square.
[3] The heat transfer suppression sheet according to [1], in which the first region has the stripe-like fiber bundle having a length of 20 mm or more.
[4] The heat transfer suppression sheet according to any one of [1] to [3], in which the second region is surrounded by the first region.
[5] The heat transfer suppression sheet according to any one of [1] to [4], in which the stripe-like fiber bundle is interconnected in a mesh shape on the surface.
[6] The heat transfer suppression sheet according to any one of [1] to [5], in which the inorganic particle is a particle composed of at least one kind of inorganic material selected from an oxide particle, a carbide particle, a nitride particle, and an inorganic hydrate particle.
[7] The heat transfer suppression sheet according to [6], in which the inorganic particle includes at least one kind of particle selected from a dry silica particle and silica aerogel.
[8] The heat transfer suppression sheet according to [7], in which the inorganic particle further includes at least one kind of particle selected from titania, zircon, zirconia, silicon carbide, zinc oxide, and alumina.
   The above object of the present invention is also achieved by the following configuration [9] relating to a battery pack.
[9] A battery pack including:
   battery cells; and
   the heat transfer suppression sheet according to any one of [1] to [8], in which
   the battery cells are connected in series or in parallel.

### ADVANTAGEOUS EFFECTS OF INVENTION

Since the heat transfer suppression sheet according to the present invention is formed on the surface with a first region having a stripe-like fiber bundle and a second region which does not contain the fiber bundle, strength of the heat transfer suppression sheet can be improved, an impact and pressure on the surface of the heat transfer suppression sheet can be alleviated, and accordingly, powder falling can be suppressed, and a decrease in heat insulation effect due to deformation of the heat transfer suppression sheet can be prevented.

With the battery pack according to the present invention, since the heat transfer suppression sheet has high strength and a heat insulation performance retention effect as described above, thermal runaway of the battery cells in the battery pack and spread of flame to the outside of a battery case can be suppressed.

### BRIEF DESCRIPTION OF DRAWINGS

[Fig. 1] Fig. 1 is a photograph substituted for a drawing showing a surface of a heat transfer suppression sheet according to an embodiment of the present invention.
[Fig. 2] Fig. 2 is a photograph substituted for a drawing showing an enlarged view of a portion of Fig. 1.
[Fig. 3] Fig. 3 is a photograph substituted for a drawing showing a cross section of the heat transfer suppression sheet according to the embodiment of the present invention.
[Fig. 4] Fig. 4 is a diagram illustrating an example of a method of defining a length of a fiber bundle, and is a photograph substituted for a drawing showing an enlarged view of a portion A in Fig. 1.
[Fig. 5] Fig. 5 is a diagram showing a mesh-like fiber bundle, and is a photograph substituted for a drawing showing an enlarged view of the portion A in Fig. 1.
[Fig. 6] Fig. 6 is a schematic diagram showing a battery pack including the heat transfer suppression sheet according to the embodiment of the present invention.

### DESCRIPTION OF EMBODIMENTS

The inventors of the present invention have conducted intensive studies on a heat transfer suppression sheet that can solve the above problems.

As a result, it has been found that when a surface of a heat transfer suppression sheet is formed with a first region having a stripe-like fiber bundle and a second region which does not contain the fiber bundle, strength of the heat transfer suppression sheet can be improved, and accordingly a high heat insulation performance can be maintained.

Hereinafter, a heat transfer suppression sheet, a production method therefor, and a battery pack according to an embodiment of the present invention will be described in detail. Note that, the present invention is not limited to the embodiment described below, and can be freely changed and implemented without departing from the gist of the present invention.

### [Heat Transfer Suppression Sheet]

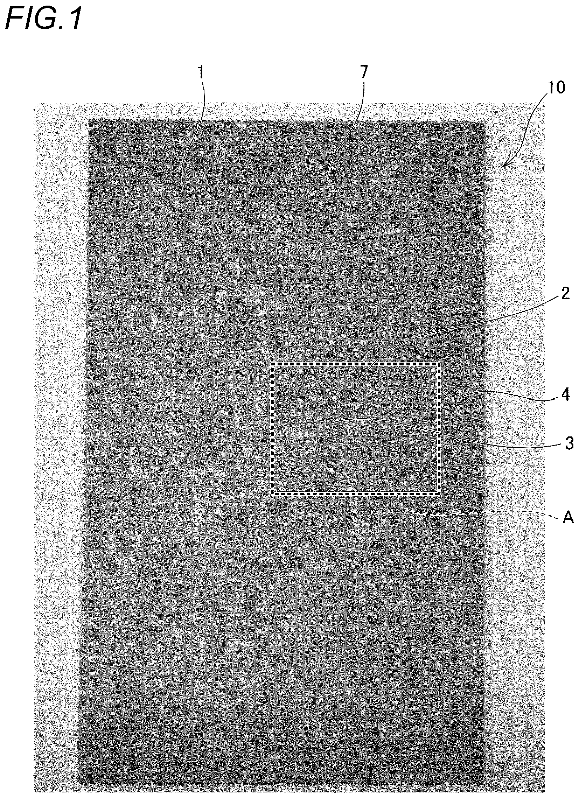

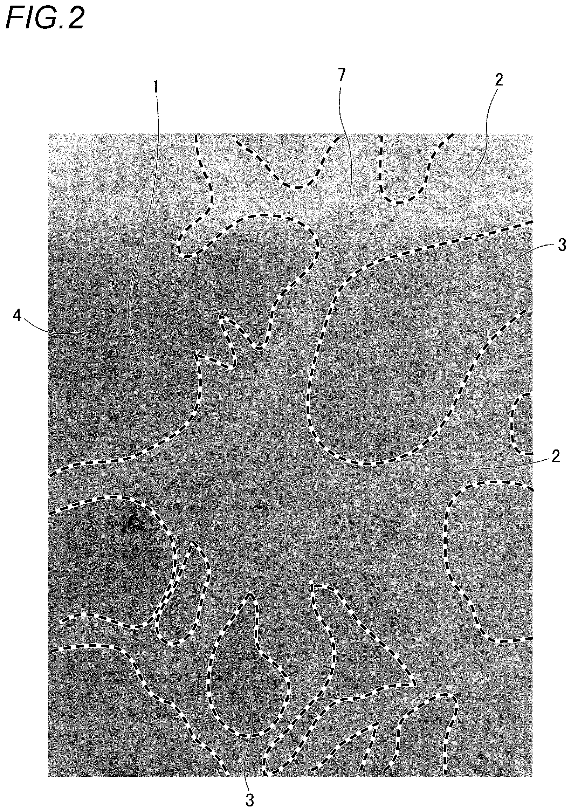

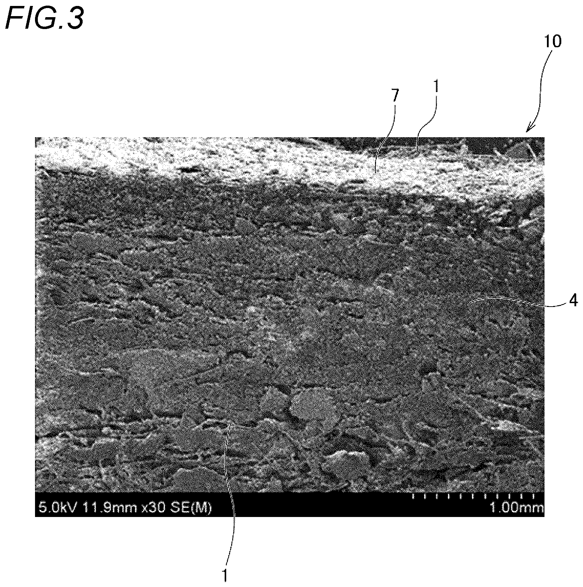

Fig. 1 is a photograph substituted for a drawing showing a surface of a heat transfer suppression sheet according to an embodiment of the present invention, and Fig. 2 is a photograph substituted for a drawing showing an enlarged view of a portion of Fig. 1. In addition, Fig. 3 is a photograph substituted for a drawing showing a cross section of the heat transfer suppression sheet according to the embodiment of the present invention.

As shown in Fig. 1 to Fig. 3, a heat transfer suppression sheet 10 according to the present embodiment includes an inorganic particle 4 and an organic fiber 1. A surface of the heat transfer suppression sheet 10 contains a first region 2 having a stripe-like fiber bundle 7 composed of organic fibers 1 and a second region 3 which does not contain the fiber bundle 7. In the present description, the fiber bundle 7 is formed by entangling 10 or more organic fibers 1 with each other, and extends in a stripe shape in a direction substantially parallel to the surface of the heat transfer suppression sheet 10.

That is, when the surface of the heat transfer suppression sheet 10 is observed, as shown in Fig. 2, it is observed that the organic fibers 1 are entangled in the first region 2. On the other hand, in the second region 3, although several organic fibers 1 are observed in some places, no fiber bundle 7 formed by entangling the organic fibers 1 is observed.

Note that, in the present embodiment, the first region 2 and the second region 3 have a sea-island structure, and the second region 3 corresponding to an island portion is formed to be surrounded by the first region 2 corresponding to a sea portion.

One example of a usage form of the heat transfer suppression sheet 10 is to interpose the heat transfer suppression sheet 10 between battery cells. A specific usage form of the heat transfer suppression sheet 10 will be described later.

In the present embodiment configured in this manner, since the fiber bundle 7 formed by entangling the organic fibers 1 is present in a stripe shape extending on the surface of heat transfer suppression sheet 10, the strength of heat transfer suppression sheet 10 can be improved. In addition, since the entire surface is not covered with the fiber bundle 7, and there is the first region 2 having the fiber bundle 7 and the second region which does not contain the fiber bundle 7, flexibility of the heat transfer suppression sheet 10 is also excellent. Further, since the fiber bundle 7 is present on the surface of the heat transfer suppression sheet 10, even when an impact or pressure is applied to the heat transfer suppression sheet 10, the fiber bundle 7 can absorb and alleviate the impact or pressing force. Therefore, falling off of the inorganic particle 4 (powder falling) can be suppressed, and a decrease in heat insulation performance of the heat transfer suppression sheet 10 can be prevented.

Note that, in the present embodiment, as shown in a cross-sectional photograph in Fig. 3, the fiber bundle 7 formed by entangling the organic fiber 1 and the organic fiber 1 is present not only on the surface but also inside of the heat transfer suppression sheet 10.

Accordingly, more excellent sheet strength can be obtained.

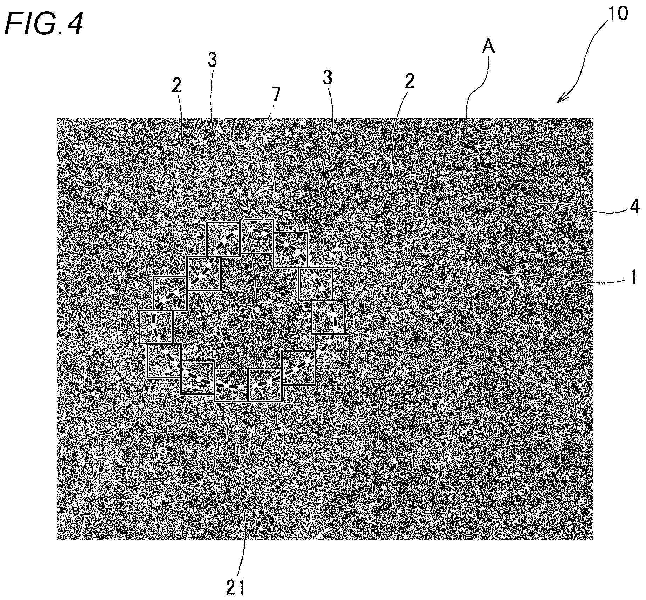

In the present embodiment, a length of the fiber bundle 7 formed to extend on the surface of the heat transfer suppression sheet 10 is preferably relatively long. An example of a method of defining the length of the fiber bundle 7 will be described with reference to Fig. 4.

As shown in Fig. 4, on the surface of the heat transfer suppression sheet 10, rectangular virtual frames 21 are disposed along the fiber bundle 7 extending in a stripe shape. In the present embodiment, the virtual frame 21 has a size of 5 mm square, and the virtual frames 21 are disposed to be continuous with each other. At this time, when there is a fiber bundle 7 passing through at least three continuous virtual frames 21, it can be determined that an effect of improving the strength of the heat transfer suppression sheet 10 is sufficient.

It is also possible to simply measure the length of the fiber bundle 7 extending in a stripe shape. For example, use can be made of a method in which a string or the like is disposed on the surface of the heat transfer suppression sheet 10 along the fiber bundle 7 and then the length of the string is measured. In the case of measuring the length of the continuous fiber bundle 7, when there is a fiber bundle 7 having a length of 20 mm or more, the effect of improving the strength of the heat transfer suppression sheet 10 can be sufficiently obtained.

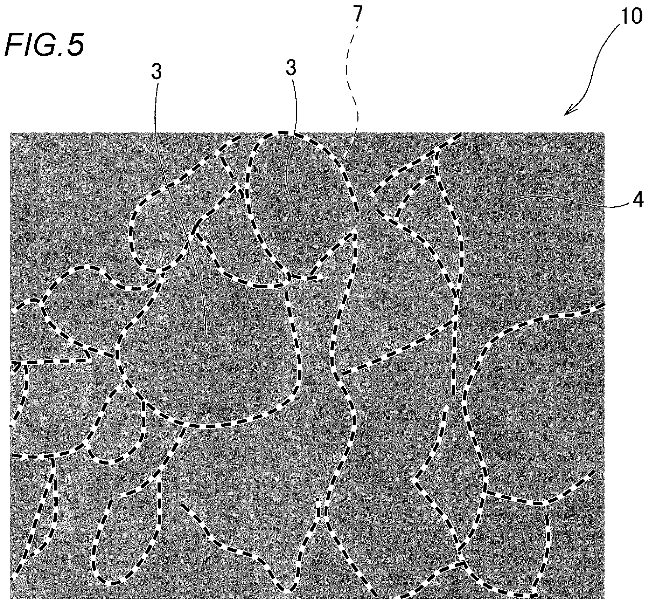

Further, as shown in Fig. 5, when the fiber bundle 7 is interconnected in a mesh shape on the surface of the heat transfer suppression sheet 10, the sheet strength can be further improved.

Hereinafter, materials constituting the heat transfer suppression sheet according to the present embodiment will be described in detail.

### <Organic Fiber>

The organic fiber 1 imparts the flexibility to the heat transfer suppression sheet 10 and has an effect of improving the strength and the shape of the sheet. A single-component organic fiber can be used as the material for the organic fiber 1 in the heat transfer suppression sheet 10, and it is preferable to use a binder fiber having a core-sheath structure. The binder fiber having a core-sheath structure includes a core portion extending in a longitudinal direction of the fiber, and a sheath portion formed to cover an outer peripheral surface of the core portion. In addition, the core portion is composed of a first organic material, the sheath portion is composed of a second organic material, and a melting point of the first organic material is higher than a melting point of the second organic material.

Even in the case where a single-component organic fiber is used as the material for the organic fiber 1, even when a binder fiber having a core-sheath structure is used, during the production of the heat transfer suppression sheet 10, by heating to melt a portion of the surface of the fiber and then cooling, a fusion portion (not shown) is formed around the organic fiber 1. The fusion portion is formed by fusing the inorganic particle 4 to the surface of the organic fiber 1 and by fusing the organic fibers 1 to each other, so that excellent sheet strength can be obtained by forming the fusion portion.

When the binder fiber having a core-sheath structure is used as the material, the core portion corresponds to the organic fiber 1 in the heat transfer suppression sheet 10. During the production of the heat transfer suppression sheet 10, when the binder fiber having a core-sheath structure is used, adjacent binder fibers are fused to each other, making it easier to form the fiber bundle 7 and further improving the sheet strength. In addition, when the binder fiber having a core-sheath structure is used, since the second organic material constituting the sheath portion is melted and then solidified again, including the inorganic particle 4 present around, an ability to retain the inorganic particle 4 can be improved.

### (First Organic Material)

When the binder fiber having a core-sheath structure is used as the material for the organic fiber 1, the core portion, i.e., the first organic material constituting the organic fiber 1, is not particularly limited as long as it has a melting point higher than that of the sheath portion, i.e., the second organic material, present on the outer peripheral surface of the organic fiber 1. Examples of the first organic material include at least one kind selected from polyethylene terephthalate, a polypropylene, and nylon.

### (Second Organic Material)

When the binder fiber having a core-sheath structure is used as the material for the organic fiber 1, the second organic material constituting the sheath portion is not particularly limited as long as it has a melting point lower than that of the first organic material constituting the organic fiber 1. Examples of the second organic material include at least one kind selected from polyethylene terephthalate, a polyethylene, a polypropylene, and nylon.

Note that, the melting point of the second organic material is preferably 90°C or higher, and more preferably 100°C or higher. In addition, the melting point of the second organic material is preferably 150°C or lower, and more preferably 130°C or lower.

### (Content of Organic Fiber)

In the present embodiment, when a content of the organic fiber 1 in the heat transfer suppression sheet 10 is appropriately controlled, the effect of improving the strength of the heat transfer suppression sheet 10 can be sufficiently obtained.

The content of the organic fiber 1 is preferably 2 mass% or more, and more preferably 4 mass% or more, with respect to a total mass of the heat transfer suppression sheet 10. When the content of the organic fiber 1 is too large, the content of the inorganic particle 4 decreases relatively. Therefore, in order to obtain a desired heat insulation performance, the content of the organic fiber is preferably 10 mass% or less, and more preferably 8 mass% or less, with respect to the total mass of the heat transfer suppression sheet 10.

### (Fiber Length of Organic Fiber)

A fiber length of the organic fiber 1 is not particularly limited, and from the viewpoint of ensuring moldability and processability, an average fiber length of the organic fiber is preferably 10 mm or less.

On the other hand, from the viewpoint of improving the strength of the heat transfer suppression sheet, the average fiber length of the organic fiber 1 is preferably 0.5 mm or more.

### <Inorganic Particle>

As the inorganic particle, a single kind of inorganic particle may be used, or two or more kinds of inorganic particles may be used in combination. From the viewpoint of a heat transfer suppression effect, as the kind of the inorganic particle, a particle composed of at least one kind of inorganic material selected from an oxide particle, a carbide particle, a nitride particle, and an inorganic hydrate particle is preferably used, and more preferably an oxide particle is used. The form thereof is not particularly limited. It is preferable to contain at least one kind selected from a nanoparticle, a hollow particle, and a porous particle. Specifically, a silica nanoparticle, a metal oxide particle, an inorganic balloon such as a microporous particle or a hollow silica particle, a particle composed of a thermally expandable inorganic material, a particle composed of a hydrous porous material, or the like can also be used.

When an average secondary particle diameter of the inorganic particle is 0.01 µm or more, the inorganic particle is easily available and an increase in production cost can be suppressed. When the average secondary particle diameter is 200 µm or less, a desired heat insulation effect can be obtained. Therefore, the average secondary particle diameter of the inorganic particle is preferably 0.01 µm or more and 200 µm or less, and more preferably 0.05 µm or more and 100 µm or less.

Note that, when two or more kinds of inorganic particles having different heat transfer suppression effects are combined, a heating element can be cooled in multiple stages and a heat absorption effect can be exhibited over a wider temperature range. Specifically, it is preferable to use a large-diameter particle and a small-diameter particle in combination. For example, in the case of using a nanoparticle as one of the inorganic particles, it is preferable to contain an inorganic particle composed of a metal oxide as the other inorganic particle. Hereinafter, the inorganic particle will be described in more detail, with a small-diameter inorganic particle as a first inorganic particle and a large-diameter inorganic particle as a second inorganic particle.

### <First Inorganic Particle>

### (Oxide Particle)

An oxide particle has a high refractive index and has a high effect of diffusely reflecting light, so that when the oxide particle is used as the first inorganic particle, radiant heat transfer can be suppressed, particularly in a high temperature range with abnormal heat generation or the like. As the oxide particle, at least one kind of particle selected from silica, titania, zirconia, zircon, barium titanate, zinc oxide, and alumina can be used. That is, among the above oxide particle that can be used as the inorganic particle, only one kind or two or more kinds of oxide particles may be used. Particularly, silica is a component having a high heat insulation property, and titania is a component having a high refractive index compared to other metal oxides, and has a high effect of diffusely reflecting light and blocking radiant heat in a high temperature range of 500°C or higher. Therefore, silica and titania are most preferably used as the oxide particle.

### (Average primary particle diameter of oxide particle: 0.001 µm or more and 50 µm or less)

Since the particle diameter of the oxide particle may influence an effect of reflecting radiant heat, when an average primary particle diameter thereof is limited to a predetermined range, an even higher heat insulation property can be obtained.

That is, when the average primary particle diameter of the oxide particle is 0.001 µm or more, a wavelength thereof is sufficiently larger than a wavelength of light that contributes to heating, and it diffusely reflects the light efficiently. Therefore, in a high temperature range of 500°C or higher, the radiant heat transfer of heat within the heat transfer suppression sheet can be suppressed, and the heat insulation property can be further improved.

On the other hand, when the average primary particle diameter of the oxide particle is 50 µm or less, even with compression, the number of contact points between the particles does not increase, and it is difficult to form a conductive heat transfer path. Therefore, the influence on the heat insulation property particularly in a normal temperature range where the conductive heat transfer is dominant can be reduced.

Note that, in the present invention, the average primary particle diameter can be determined by observing particles with a microscope, comparing the particles with a standard scale, and taking an average of any 10 particles.

### (Nanoparticle)

**In** the present invention, the nanoparticle refers to a nanometer-order particle having a spherical or nearly spherical shape and having an average primary particle diameter of less than 1 µm. The nanoparticle has a low density and thus suppresses the conductive heat transfer, and when the nanoparticle is used as the first inorganic particle, gaps are further finely dispersed, so that an excellent heat insulation property of suppressing convective heat transfer can be obtained. Therefore, it is preferable to use a nanoparticle since it can suppress the conduction of heat between adjacent nanoparticles during normal use of a battery in a normal temperature range.

Further, when the nanoparticle having a small average primary particle diameter is used as the oxide particle, even when the heat transfer suppression sheet is compressed by expansion due to thermal runaway of the battery cell and the internal density increases, an increase in conductive heat transfer of the heat transfer suppression sheet can be suppressed. This is thought to be because the nanoparticle tends to form fine gaps between particles due to a repulsive force caused by static electricity, and the bulk density thereof is low, so that it filled with the particle so as to provide a cushioning property.

Note that, in the present invention, when the nanoparticle is used as the first inorganic particle, the kind thereof is not particularly limited as long as the above definition of nanoparticle is met. For example, since a silica nanoparticle is a material having a high heat insulation property and has a few contact points between particles, the amount of heat conducted by the silica nanoparticle is smaller than that in a case of using a silica particle having a large particle diameter. In addition, since a generally available silica nanoparticle has a bulk density of about 0.1 (g/cm³), for example, even when battery cells disposed on both sides of the heat transfer suppression sheet thermally expand and a large compressive stress is applied to the heat transfer suppression sheet, the size (area) or the number of contact points between silica nanoparticles does not increase remarkably, and the heat insulation property can be maintained. Therefore, it is preferable to use a silica nanoparticle as the nanoparticle. Examples of the silica nanoparticle include wet silica, dry silica, and aerogel. A silica nanoparticle that is particularly suitable for the present embodiment will be described below.

Generally, the particles of wet silica are agglomerated, whereas the particles of dry silica can be dispersed. Since the conductive heat transfer is dominant in heat conduction in a temperature range of 300°C or lower, the dry silica in which particles can be dispersed can provide a more excellent heat insulation performance than the wet silica.

Note that, the heat transfer suppression sheet according to the present embodiment is preferably produced by a production method in which a mixture containing materials is processed into a sheet by a dry method. Therefore, as the inorganic particle, it is preferable to use dry silica or silica aerogel which has a low thermal conductivity.

### (Average primary particle diameter of nanoparticle: 1 nm or more and 100 nm or less)

When the average primary particle diameter of the nanoparticle is limited to a predetermined range, an even higher heat insulation property can be obtained.

That is, when the average primary particle diameter of the nanoparticle is 1 nm or more and 100 nm or less, the convective heat transfer and the conductive heat transfer of the heat within the heat transfer suppression sheet can be suppressed particularly in a temperature range of lower than 500°C, and the heat insulation property can be further improved. In addition, even when a compressive stress is applied, gaps remaining between the nanoparticles and contact points between many particles can suppress the conductive heat transfer, and the heat insulation property of the heat transfer suppression sheet can be maintained.

Note that, the average primary particle diameter of the nanoparticle is more preferably 2 nm or more, and still more preferably 3 nm or more. On the other hand, the average primary particle diameter of the nanoparticle is more preferably 50 nm or less, and still more preferably 10 nm or less.

### (Inorganic Hydrate Particle)

The inorganic hydrate particle exhibits a so-called "heat absorption effect" that the inorganic hydrate particle receives heat from a heating element, thermally decomposes when reaching a thermal decomposition start temperature or higher, releases crystal water thereof, and lowers the temperature of the heating element and surroundings. The inorganic hydrate particle forms a porous material after releasing the crystal water, and exhibits a heat insulation effect due to countless air pores thereof.

Specific examples of the inorganic hydrate include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).

For example, aluminum hydroxide has about 35% crystal water, and as shown in the following formula, thermally decomposes to release the crystal water and exhibits a heat absorption effect. Then, after releasing the crystal water, aluminum hydroxide forms alumina (Al₂O₃), which is a porous material, and functions as a heat insulation material.

2Al(OH)₃ → AL₂O₃ + 3H₂O

Note that, as will be described later, the heat transfer suppression sheet 10 according to the present embodiment is preferably interposed between, for example, battery cells, but in a battery cell that has experienced thermal runaway, the temperature rapidly rises to over 200°C and continues to rise to about 700°C. Therefore, it is preferable that the inorganic particle is composed of an inorganic hydrate whose thermal decomposition start temperature is 200°C or higher.

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise. Therefore, these are preferred inorganic hydrates.

### (Average secondary particle diameter of inorganic hydrate particle: 0.01 µm or more and 200 µm or less)

In the case where the inorganic hydrate particle is used as the first inorganic particle, when the average particle diameter thereof is too large, it takes a certain amount of time for the first inorganic particle (inorganic hydrate) near the center of the heat transfer suppression sheet 10 to reach the thermal decomposition temperature thereof, so that the first inorganic particle near the center of the sheet may not be completely thermally decomposed. Therefore, the average secondary particle diameter of the inorganic hydrate particle is preferably 0.01 µm or more and 200 µm or less, and more preferably 0.05 µm or more and 100 µm or less.

### (Particle Composed of Thermally Expandable Inorganic Material)

Examples of the thermally expandable inorganic material include vermiculite, bentonite, mica, and perlite.

### (Particle Composed of Hydrous Porous Material)

Specific examples of the hydrous porous material include zeolite, kaolinite, montmorillonite, acid clay, diatomaceous earth, wet silica, dry silica, aerogel, mica, and vermiculite.

### (Inorganic Balloon)

The heat transfer suppression sheet 10 according to the present embodiment may contain an inorganic balloon as the first inorganic particle.

When the inorganic balloon is contained, the convective heat transfer or the conductive heat transfer of the heat within the heat transfer suppression sheet can be suppressed in a temperature range of lower than 500°C, and the heat insulation property of the heat transfer suppression sheet can be further improved.

As the inorganic balloon, at least one kind selected from a whitebait balloon, a silica balloon, a fly ash balloon, a perlite balloon, and a glass balloon can be used.

### (Content of inorganic balloon: 60 mass% or less with respect to total mass of heat insulation material)

The content of the inorganic balloon is preferably 60 mass% or less with respect to the total mass of the heat insulation material.

### (Average particle diameter of inorganic balloon: 1 µm or more and 100 µm or less)

The average particle diameter of the inorganic balloon is preferably 1 µm or more and 100 µm or less.

### <Second Inorganic Particle>

When the heat transfer suppression sheet contains two kinds of inorganic particles, the second inorganic particle is not particularly limited as long as it is different from the first inorganic particle in material, particle diameter, or the like. As the second inorganic particle, an oxide particle, a carbide particle, a nitride particle, an inorganic hydrate particle, a silica nanoparticle, a metal oxide particle, an inorganic balloon such as a microporous particle or a hollow silica particle, a particle composed of a thermally expandable inorganic material, a particle composed of a hydrous porous material, or the like can be used. Details of these are as described above.

Note that, the nanoparticle has extremely low conductive heat transfer, and can maintain an excellent heat insulation property even when a compressive stress is applied to the heat transfer suppression sheet. In addition, a metal oxide particle such as titania has a high effect of blocking radiant heat. Further, when a large-diameter inorganic particle and a small-diameter inorganic particle are used, the small-diameter inorganic particle enters gaps between the large-diameter inorganic particles, leading to a more dense structure, and the heat transfer suppression effect can be improved. Therefore, for example, when the nanoparticle is used as the first inorganic particle, it is preferable that the heat transfer suppression sheet further contains a particle composed of a metal oxide having a diameter larger than that of the first inorganic particle as the second inorganic particle.

Examples of the metal oxide include silicon oxide, titanium oxide, aluminum oxide, barium titanate, zinc oxide, zircon, and zirconium oxide. Particularly, titanium oxide (titania) is a component having a high refractive index compared to other metal oxides, and has a high effect of diffusely reflecting light and blocking radiant heat in a high temperature range of 500°C or higher. Therefore, titania is most preferably used.

When at least one kind of particle selected from a dry silica particle and silica aerogel is used as the first inorganic particle, and at least one kind of particle selected from titania, zircon, zirconia, silicon carbide, zinc oxide, and alumina is used as the second inorganic particle, in order to obtain an excellent heat insulation performance within a temperature range of 300°C or lower, the content of the first inorganic particle is preferably 50 mass% or more, more preferably 60 mass% or more, and still more preferably 70 mass% or more, with respect to a total mass of the inorganic particles. In addition, the content of the first inorganic particle is preferably 95 mass% or less, more preferably 90 mass% or less, and still more preferably 80 mass% or less, with respect to the total mass of the inorganic particles.

On the other hand, in order to obtain an excellent heat insulation performance within a temperature range of higher than 300°C, the content of the second inorganic particle is preferably 5 mass% or more, more preferably 10 mass% or more, and still more preferably 20 mass% or more, with respect to the total mass of the inorganic particles. In addition, the content of the second inorganic particle is preferably 50 mass% or less, more preferably 40 mass% or less, and still more preferably 30 mass% or less, with respect to the total mass of the inorganic particles.

### (Average primary particle diameter of second inorganic particle)

In the case where the second inorganic particle composed of a metal oxide is contained in the heat transfer suppression sheet, when the average primary particle diameter of the second inorganic particle is 1 µm or more and 50 µm or less, the radiant heat transfer can be efficiently suppressed in a high temperature range of 500°C or higher. The average primary particle diameter of the second inorganic particle is more preferably 5 µm or more and 30 µm or less, and most preferably 10 µm or less.

### (Content of Inorganic Particle)

In the present embodiment, when a total content of the inorganic particle 4 in the heat transfer suppression sheet 10 is appropriately controlled, a sufficient heat insulation property can be ensured in the heat transfer suppression sheet 10.

The total content of the inorganic particle 4 is preferably 60 mass% or more, and more preferably 70 mass% or more, with respect to the total mass of the heat transfer suppression sheet 10. When the total content of the inorganic particle 4 is too large, the content of the organic fiber 1 decreases relatively. Therefore, in order to obtain a sufficient effect of improving the sheet strength by the organic fiber 1, the total content of the inorganic particle 4 is preferably 95 mass% or less, and more preferably 90 mass% or less, with respect to the total mass of the heat transfer suppression sheet 10.

Note that, the content of the inorganic particle 4 in the heat transfer suppression sheet 10 can be calculated, for example, by heating the heat transfer suppression sheet 10 at 800°C, decomposing organic components, and then measuring the mass of the remaining portion.

The heat transfer suppression sheet 10 according to the present embodiment may contain an organic fiber constituted of an organic material different from the first organic material, or an inorganic fiber, in addition to the organic fiber 1 and the inorganic particle 4. When the heat transfer suppression sheet 10 contains an inorganic fiber, inorganic fibers that are preferably contained in the present embodiment will be described below.

### <Inorganic Fiber>

As the inorganic fiber, a single kind of inorganic fiber may be used, or two or more kinds of inorganic fibers may be used in combination. Examples of the inorganic fiber include ceramic-based fibers such as a silica fiber, an alumina fiber, an alumina silicate fiber, a zirconia fiber, a carbon fiber, a soluble fiber, a refractory ceramic fiber, an aerogel composite, a magnesium silicate fiber, an alkaline earth silicate fiber, a potassium titanate fiber, a silicon carbide fiber, and a potassium titanate whisker fiber, glass-based fibers such as a glass fiber, glass wool, and slag wool, rock wool, a basalt fiber, a mullite fiber, and natural mineral-based fibers such as wollastonite as mineral-based fibers other than those listed above.

These inorganic fibers are preferred in terms of heat resistance, strength, easy availability, and the like. Among the inorganic fibers, a silica-alumina fiber, an alumina fiber, a silica fiber, rock wool, an alkaline earth silicate fiber, and a glass fiber are particularly preferred from the viewpoint of handling properties.

The cross-sectional shape of the inorganic fiber is not particularly limited, and examples thereof include a circular cross section, a flat cross section, a hollow cross section, a polygonal cross section, and a core cross section. Among them, an irregular cross-section fiber having a hollow cross section, a flat cross section, or a polygonal cross section can be preferably used since the heat insulation property is slightly improved.

The lower limit of an average fiber length of the inorganic fiber is preferably 0.1 mm, and the lower limit is more preferably 0.5 mm. On the other hand, the upper limit of the average fiber length of the inorganic fiber is preferably 50 mm, and the upper limit is more preferably 10 mm. When the average fiber length of the inorganic fiber is less than 0.1 mm, the inorganic fibers are unlikely to be entangled with each other, and mechanical strength of the heat transfer suppression sheet 10 may decrease. On the other hand, when the average fiber length is more than 50 mm, a reinforcement effect can be obtained, but the inorganic fibers may not be able to entangle tightly with each other, or a single inorganic fiber may curl up, making continuous gaps more likely to occur, and thus there is a risk that the heat insulation property decreases.

The lower limit of an average fiber diameter of the inorganic fiber is preferably 1 µm, the lower limit is more preferably 2 µm, and the lower limit is still more preferably 3 µm. On the other hand, the upper limit of the average fiber diameter of the inorganic fiber is preferably 15 µm, and the upper limit is more preferably 10 µm. When the average fiber diameter of the inorganic fiber is less than 1 µm, there is a risk that the mechanical strength of the inorganic fiber decreases. In addition, from the viewpoint of the influence on human health, the average fiber diameter of the inorganic fiber is preferably 3 µm or more. On the other hand, when the average fiber diameter of the inorganic fiber is larger than 15 µm, solid heat transfer using the inorganic fiber as a medium may increase, resulting in a decrease in heat insulation property, and the moldability and the strength of the heat transfer suppression sheet may deteriorate.

### (Content of Inorganic Fiber)

In the present embodiment, when the heat transfer suppression sheet 10 contains an inorganic fiber, a content of the inorganic fiber is preferably 3 mass% or more and 15 mass% or less with respect to the total mass of the heat transfer suppression sheet 10.

In addition, the content of the inorganic fiber is preferably 5 mass% or more and 10 mass% or less with respect to the total mass of the heat transfer suppression sheet 10. With such contents, a shape retention property, pressing force resistance, wind pressure resistance, and an ability to retain the inorganic particle of the inorganic fiber are exhibited in a well-balanced manner. In addition, when the content of the inorganic fiber is appropriately controlled, the organic fiber 1 and the inorganic fiber are entangled with each other to form a three-dimensional network, so that an effect of retaining the inorganic particle 4 and other blending materials to be described later can be further improved.

### <Other Blending Materials>

Note that, the heat transfer suppression sheet according to the present embodiment may further contain a binding material, a colorant, or the like, if necessary. All of these are useful for reinforcing the heat transfer suppression sheet and improving the moldability, and a total amount thereof is preferably 10 mass% or less with respect to the total mass of the heat transfer suppression sheet.

### [Method for Producing Heat Transfer Suppression Sheet]

An example of a method for producing the heat transfer suppression sheet 10 according to the present embodiment will be described below.

For example, a binder fiber (not shown) having a core-sheath structure and the inorganic particle 4 are charged into a mixer such as a V-type mixer at a predetermined ratio to prepare a mixture.

Note that, as described above, the binder fiber is preferably a fiber having a core-sheath structure, which includes a core portion composed of the first organic material and a sheath portion composed of the second organic material. In this case, the melting point of the first organic material is higher than the melting point of the second organic material.

Thereafter, the obtained mixture is charged into a predetermined mold and pressurized with a pressing machine or the like, and the obtained molded body is heated to melt the sheath portion of the binder fiber. Thereafter, the heated molded body is cooled, whereby the molten sheath portion solidifies on the surface of the molded body and the core portions (organic fibers 1) are fused to each other, to form the fiber bundle 7 on the surface of the heat transfer suppression sheet 10. In addition, in the molded body, the second organic material constituting the molten sheath portion and the inorganic particle 4 present around the binder fiber are fused to the core portion, and are also fused to each other in a region where the binder fibers are in contact with each other. Accordingly, the heat transfer suppression sheet 10 according to the present embodiment can be obtained.

In the present embodiment, it is preferable to produce the heat transfer suppression sheet 10 by a dry method. In the case of using a dry method, the inorganic particle 4 used is suitable for the dry method, and a solvent such as water, which is necessary for molding in a wet method, is not added to the mixture. However, during the production of the heat transfer suppression sheet 10, in order to prevent a powder such as the inorganic particle 4 from flying around and prevent raw materials from being difficult to handle, a small amount of a solvent such as water can also be added within the range of the dry method. For example, by adding a small amount of a solvent such as water to the mixture, scattering of the inorganic particle during the production can be suppressed.

With the production method according to the present embodiment, since the fiber bundle 7 composed of the organic fiber 1 is formed on the surface, a heat transfer suppression sheet 10 having excellent strength can be produced. In addition, since the melting point of the first organic material constituting the core portion is higher than the melting point of the second organic material constituting the sheath portion, when heating the mixture, the sheath portion can be melted while the core portion remains. Then, after cooling, the outer peripheral surface of the core portion is covered with the second organic material including the inorganic particle 4, so that the inorganic particle 4 can be retained. The organic fiber 1 to which the inorganic particle 4 is fused appears to have a larger fiber diameter, and therefore has higher strength than the organic fiber 1 alone. Further, since the binder fiber is present in an irregular direction in the mixture, the organic fibers 1 are fused to each other in the region where the binder fibers are in contact with each other, forming a three-dimensional framework. As a result, the shape of the entire heat transfer suppression sheet can be retained with even higher strength.

Note that, even when an organic fiber without a core-sheath structure is used as the binder fiber, the fiber bundle 7 extending in a stripe shape can can be formed on the surface. However, during the production of the heat transfer suppression sheet, it is common to perform heating from one side or both sides perpendicular to a thickness direction, and since a material having a high heat insulation performance is used, it is difficult to raise the temperature to the same degree on a surface side and inside of the sheet. In order to produce a heat transfer suppression sheet 10 having even higher sheet strength preventing organic fibers from melting too much on the surface side of the sheet and by melting only the surface of the organic fiber inside the sheet, coating the surface with the inorganic particle, or fusing the organic fibers to each other, strict temperature control is required.

With respect to this, when a binder fiber having a core-sheath structure in which the melting point of the first organic material constituting the core portion is higher than the melting point of the second organic material constituting the sheath portion is used, the temperature can be set extremely easily to make the core portion remain and to melt the sheath portion. As a result, the obtained heat transfer suppression sheet has an ideal structure in which the organic fibers 1 are fused to each other to form a framework that improves the strength of the sheet on both the surface side and a center side, and the inorganic particle 4 is fused on the surface of the organic fiber 1. Therefore, it is preferable to use the binder fiber having a core-sheath structure as described above as the material for the heat transfer suppression sheet 10.

Note that, an adhesive such as a hot melt powder may be contained in the mixture as a raw material for the heat transfer suppression sheet, and details will be described later. By appropriately adjusting the kind and the content of the adhesive contained in the mixture, the ability to retain the inorganic particle 4 can be improved and the powder falling can be further suppressed.

As a result, the heat transfer suppression sheet 10 produced by the production method according to the present embodiment has an even higher strength, and even when a pressing force or impact is applied to the heat transfer suppression sheet, the shape can be maintained, the powder falling can be suppressed, and an excellent heat insulation performance can be maintained.

Note that, in order to further suppress the powder falling, the surface of the heat transfer suppression sheet 10 may be covered with a film or the like. Examples of a polymer film include a film made of a polyimide, a polycarbonate, PET, p-phenylene sulfide, a polyetherimide, a cross-linked polyethylene, a flame-retardant chloroprene rubber, polyvinylidene fluoride, rigid vinyl chloride, polybutylene terephthalate, PTFE, PFA, FEP, ETFE, rigid PCV, flame-retardant PET, a polystyrene, a polyethersulfone, a polyamide-imide, a polyacrylonitrile, a polyethylene, a polypropylene, and a polyamide. Note that, the method of covering the surface of the heat transfer suppression sheet 10 with a film is not particularly limited, and examples thereof include a method of performing pasting with an adhesive or the like, a method of wrapping the heat transfer suppression sheet 10 in a film, and a method of housing the heat transfer suppression sheet 10 in a bag-shaped film.

Next, the preferred binder fiber and heating conditions used in the method for producing a heat transfer suppression sheet according to the present embodiment will be described.

### <Binder Fiber>

In the present embodiment, when the binder fiber having a core-sheath structure is used, the binder fiber is not particularly limited as long as the melting point of the first organic material constituting the core portion is higher than the melting point of the second organic material constituting the sheath portion. As the first organic material constituting the core portion, at least one kind selected from polyethylene terephthalate, a polypropylene, and nylon can be selected. In addition, as the second organic material constituting the sheath portion, at least one kind selected from polyethylene terephthalate, a polyethylene, a polypropylene, and nylon can be selected.

When the melting point of the first organic material constituting the core portion is sufficiently higher than the melting point of the second organic material constituting the sheath portion, a setting tolerance of the heating temperature in the heating step can be expanded, and the temperature setting for obtaining a desired structure can be made easier. For example, the melting point of the first organic material is preferably 60°C or more higher, more preferably 70°C or more higher, and still more preferably 80°C or more higher than the melting point of the second organic material.

Note that, the binder fiber having a core-sheath structure as described above is generally commercially available, and the materials constituting the core portion and the sheath portion may be the same as or different from each other. Examples of the binder fiber in which the core portion and the sheath portion are constituted of the same material having different melting points include one in which the core portion and the sheath portion are constituted of polyethylene terephthalate, one in which the core portion and the sheath portion are constituted of a polypropylene, and one in which the core portion and the sheath portion are constituted of nylon. Examples of the binder fiber in which the core portion and the sheath portion are constituted of different materials include one in which the core portion is constituted of polyethylene terephthalate and the sheath portion is constituted of a polyethylene, and one in which the core portion is constituted of a polypropylene and the sheath portion is constituted of a polyethylene.

In the present embodiment, the melting point of the second organic material constituting the sheath portion of the binder fiber refers to a melting temperature at which the second organic material begins to undergo melting deformation, and softening accompanied by a change in shape is also considered to be a kind of melting deformation. The melting point of the sheath portion of the binder fiber can be measured, for example, by the following method.

A binder fiber to be measured is disposed in contact with a glass fiber having a higher melting point, heated from room temperature to, for example, 200°C at a heating rate of 5°C/min, and thereafter cooled to room temperature. At this time, when the surface of the binder fiber undergoes melting deformation and is fused at a portion in contact with the glass fiber, or a cross-sectional shape of the binder fiber changes, it can be determined that the melting point of the second organic material constituting the sheath portion is 200°C or lower. In the present embodiment, when the heating temperature is changed variously, and the fusion state of the binder fiber and the glass fiber after cooling by the above method or the cross-sectional shape of the binder fiber is observed, the melting point of the second organic material constituting the sheath portion can be determined.

### (Content of Binder Fiber)

In the present embodiment, in the case where the binder fiber having a core-sheath structure is used as the material, when a content of the binder fiber in the mixture is appropriately controlled, the fiber bundle 7 having an appropriate length can be formed on the surface of the obtained heat transfer suppression sheet 10, and excellent sheet strength can be obtained.

The content of the binder fiber is preferably 5 mass% or more, and more preferably 10 mass% or more, with respect to a total mass of the mixture. When the content of the binder fiber is too large, the content of the inorganic particle 4 decreases relatively. Therefore, in order to obtain a desired heat insulation performance, the content of the binder fiber is preferably 25 mass% or less, and more preferably 20 mass% or less, with respect to the total mass of the mixture.

### <Hot Melt Powder>

In the present embodiment, in addition to the binder fiber and the inorganic particle 4, the mixture may contain a hot melt powder. The hot melt powder is a powder that contains, for example, a third organic material different from the first organic material and the second organic material, and has a property of being melted by heating. By containing the hot melt powder in the mixture and heating the same, when the hot melt powder is cooled after melting, the hot melt powder, including the surrounding inorganic particle 4, hardens. Therefore, the falling off of the inorganic particle 4 from the heat transfer suppression sheet 10 can be further suppressed.

Examples of the hot melt powder include those having various melting points, and it is sufficient to select a hot melt powder having an appropriate melting point in consideration of the melting points of the core portion and the sheath portion of the binder fiber used. Specifically, when the third organic material, which is a component constituting the hot melt powder, has a melting point lower than that of the first organic material constituting the organic fiber, the heating temperature can be set to melt the sheath portion and the hot melt powder while the core portion remains. For example, when the melting point of the hot melt powder is equal to or lower than the melting point of the sheath portion, it is sufficient to set the heating temperature during the production between the melting point of the core portion and the melting point of the sheath portion, so that the heating temperature can be set much more easily.

On the other hand, the kind of the hot melt powder to be used can also be selected such that the melting point of the hot melt powder is between the melting point of the core portion and the melting point of the sheath portion. In the case of using the hot melt powder having such a melting point, when both the sheath portion and the hot melt powder are cooled and harden after melting, the organic fiber (core portion) 1 and the surrounding molten sheath portion, and the hot melt powder present in gaps in the inorganic particle 4 firstly harden. As a result, the position of the organic fiber 1 can be fixed, and thereafter the molten sheath portion is fused to the organic fiber, making it easier to form a three-dimensional framework. Therefore, the strength of the entire sheet can be further improved.

When the melting point of the third organic material constituting the hot melt powder is sufficiently lower than the melting point of the first organic material constituting the core portion, the setting tolerance of the heating temperature in the heating step can be expanded, and the temperature setting for obtaining a desired structure can be made easier. For example, the melting point of the first organic material is preferably 60°C or more higher, more preferably 70°C or more higher, and still more preferably 80°C or more higher than the melting point of the third organic material.

Note that, the melting point of the hot melt powder (third organic material) is preferably 80°C or higher, and more preferably 90°C or higher. In addition, the melting point of the hot melt powder (third organic material) is preferably 180°C or lower, and more preferably 150°C or lower. Examples of the component constituting the hot melt powder include a polyethylene, a polyester, a polyamide, and ethylene vinyl acetate.

### (Content of Hot Melt Powder)

When the hot melt powder is contained in the mixture in order to suppress the falling off of the inorganic particle, the powder falling suppression effect can be obtained even when the content thereof is very small. Therefore, the content of the hot melt powder is preferably 0.5 mass% or more, and more preferably 1 mass% or more, with respect to the total mass of the mixture.

On the other hand, when the content of the hot melt powder is increased, the content of the inorganic particle 4 or the like decreases relatively. Therefore, in order to obtain a desired heat insulation performance, the content of the hot melt powder is preferably 5 mass% or less, and more preferably 4 mass% or less, with respect to the total mass of the mixture.

### <Heating Conditions>

A step of processing the mixture into a sheet includes a step of pressurizing the mixture and a step of heating the mixture. When the binder fiber having a core-sheath structure is used as the material for the heat transfer suppression sheet 10, the heating temperature in the heating step is preferably a temperature higher than the melting point of the second organic material constituting the sheath portion and lower than the melting point of the first organic material constituting the core portion. By setting the heating temperature like this, as described above, the strength of the sheet can be ensured by the core portion both on the surface side and the center side of the sheet, and the inorganic particle 4 can be retained by the fused sheath portion.

Specifically, the heating temperature in the heating step is set to preferably 10°C or more higher, and more preferably 20°C or more higher than the melting point of the second organic material constituting the sheath portion. On the other hand, the heating temperature is set to preferably 10°C or more lower, and more preferably 20°C or more lower than the melting point of the first organic material constituting the core portion.

A heating time is not particularly limited, and it is preferable to set a heating time that allows the sheath portion to be sufficiently melted. For example, it can be set to 3 minutes or longer and 15 minutes or shorter.

When the hot melt powder is contained as a material for the heat transfer suppression sheet, the heating temperature in the heating step is set to preferably 10°C or more higher, and more preferably 20°C or more higher than the higher one of the melting point of the second organic material constituting the sheath portion and the melting point of the third organic material constituting the hot melt powder. On the other hand, the heating temperature is set to preferably 10°C or more lower, and more preferably 20°C or more lower than the melting point of the first organic material constituting the core portion. By setting the heating temperature like this, a strong framework can be formed, the strength of the sheet can be further improved, and the falling off of the inorganic particle 4 can be prevented.

### <Thickness of Heat Transfer Suppression Sheet>

A thickness of the heat transfer suppression sheet according to the present embodiment is not particularly limited, and is preferably 0.05 mm or more and 10 mm or less. When the thickness is 0.05 mm or more, sufficient compressive strength can be obtained. On the other hand, when the thickness is 10 mm or less, a good heat insulation property of the heat transfer suppression sheet can be obtained.

### [Battery Pack]

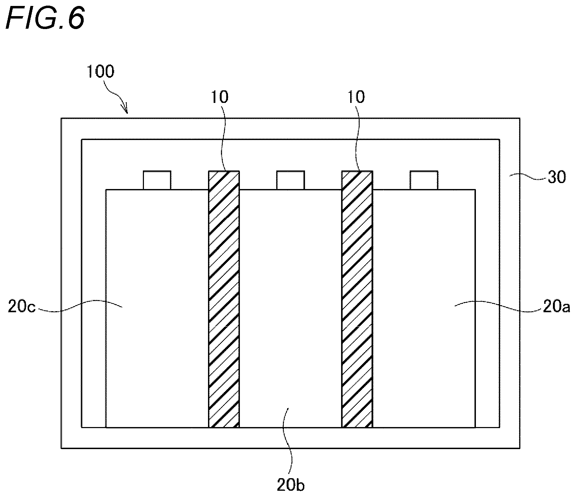

Fig. 6 is a schematic diagram showing a battery pack including the heat transfer suppression sheet according to the embodiment of the present invention. As shown in Fig. 6, a battery pack 100 includes battery cells 20a, 20b, and 20c, and the heat transfer suppression sheet 10 according to the present embodiment, and the battery cells 20a, 20b, and 20c are connected in series or in parallel.

Specifically, the heat transfer suppression sheet 10 is interposed between the battery cell 20a and the battery cell 20b and between the battery cell 20b and the battery cell 20c. The battery pack 100 is constructed by housing the battery cells 20a, 20b, and 20c in a battery case 30 in a state where the battery cells 20a, 20b, and 20c are connected in series or in parallel (the connected state is not shown). Note that, the battery cells 20a, 20b, and 20c are, for example, preferably a lithium ion secondary battery, but is not particularly limited thereto, and may be applied to other secondary batteries.

Note that, the heat transfer suppression sheet 10 is as described above.

In the battery pack 100 configured in this manner, even when a certain battery cell 20a has a high temperature, since the heat transfer suppression sheet 10 having a heat transfer suppression effect is present between the battery cell 20a and the battery cell 20b, it is possible to suppress the propagation of heat to the battery cell 20b.

In addition, since the heat transfer suppression sheet 10 according to the present embodiment has high strength, and has the effect of absorbing impacts and being resistant to pressures, thermal expansion of the battery cells 20a, 20b, and 20c can also be suppressed during charging and discharging of the battery cells. Therefore, since a distance between the battery cells can be ensured, and an excellent heat insulation performance can be maintained, the thermal runaway of the battery cells can be prevented. In addition, since it has the powder falling suppression effect, it can be easily handled.

Note that, the battery pack 100 according to the present embodiment is not limited to the battery pack illustrated in Fig. 6. For example, the heat transfer suppression sheet 10 may be disposed not only between the battery cell 20a and the battery cell 20b and between the battery cell 20b and the battery cell 20c, but also between the battery cells 20a, 20b, and 20c and the battery case 30, or may be pasted to an inner surface of the battery case 30.

In the battery pack 100 configured in this manner, when a certain battery cell ignites, it is possible to suppress the flame from spreading to the outside of the battery case 30.

For example, the battery pack 100 according to the present embodiment is used in an electric vehicle (EV) or the like, and is sometimes disposed under a passenger's floor. In this case, even when the battery cell ignites, the safety of the passenger can be ensured.

In addition, since the heat transfer suppression sheet 10 can be disposed not only between the battery cells but also between the battery cells 20a, 20b, and 20c and the battery case 30, it is not necessary to newly prepare a flame retardant material or the like, and a safe battery pack 100 can be easily formed at a low cost.

In the battery pack according to the present embodiment, the heat transfer suppression sheet 10 disposed between the battery cells 20a, 20b, and 20c and the battery case 30 may be in contact with the battery cell or may have a gap therebetween. However, in the case where there is a gap between the heat transfer suppression sheet 10 and the battery cells 20a, 20b, and 20c, even when the temperature of any one battery cell of the battery cells rises and the volume expands, the deformation of the battery cell is allowable.

Note that, the heat transfer suppression sheet 10 according to the present embodiment can be produced into various shapes depending on the production method. Therefore, it is not influenced by the shapes of the battery cells 20a, 20b, and 20c and the battery case 30, and can be adapted to any shape. Specifically, it can be applied to cylindrical batteries, flat batteries, and the like, in addition to prismatic batteries.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2022-086808) filed on May 27, 2022, and the contents thereof are incorporated herein by reference.

### REFERENCE SIGNS LIST

1 organic fiber
2 first region
3 second region
4 inorganic particle
7 fiber bundle
10 heat transfer suppression sheet
20a, 20b, 20c battery cell
21 virtual frame
30 battery case
100 battery pack

## Claims

1. A heat transfer suppression sheet comprising:
an inorganic particle; and
an organic fiber, wherein
a surface of the heat transfer suppression sheet comprises a first region and a second region, the first region comprising a stripe-like fiber bundle composed of the organic fibers, and the second region does not comprise the fiber bundle.

2. The heat transfer suppression sheet according to claim 1, wherein the first region comprises the stripe-like fiber bundle passing through at least three continuous virtual frames, each frame being a 5 mm square.

3. The heat transfer suppression sheet according to claim 1, wherein the first region comprises the stripe-like fiber bundle having a length of 20 mm or more.

4. The heat transfer suppression sheet according to claim 1, wherein the second region is surrounded by the first region.

5. The heat transfer suppression sheet according to claim 1, wherein the stripe-like fiber bundles are interconnected in a mesh shape on the surface.

6. The heat transfer suppression sheet according to claim 1, wherein the inorganic particle is a particle composed of at least one kind of inorganic material selected from an oxide particle, a carbide particle, a nitride particle, and an inorganic hydrate particle.

7. The heat transfer suppression sheet according to claim 6, wherein the inorganic particle comprises at least one kind of particle selected from a dry silica particle and silica aerogel.

8. The heat transfer suppression sheet according to claim 7, wherein the inorganic particle further comprises at least one kind of particle selected from titania, zircon, zirconia, silicon carbide, zinc oxide, and alumina.

9. A battery pack comprising:
battery cells; and
the heat transfer suppression sheet according to any one of claims 1 to 8, wherein
the battery cells are connected in series or in parallel.
